(19) Europäisches Patentamt
European Patent Office
Office européen des brevets

(11) **EP 2 916 162 A1**

(12) **EUROPEAN PATENT APPLICATION**

(43) Date of publication:
**09.09.2015 Bulletin 2015/37**

(51) Int Cl.:
***G02B 23/12*** *(2006.01)*     ***H04N 5/33*** *(2006.01)*

(21) Application number: **14157457.4**

(22) Date of filing: **03.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **UAB "Yukon Advanced Optics Worldwide"**
**06326 Vilnius (LT)**

(72) Inventor: **Alsheuski, Aliaksandr Lida (BY)**

(74) Representative: **Zaboliene, Reda**
**METIDA law firm of Reda Zaboliene**
**Business center VERTAS**
**Gyneju str. 16**
**01109 Vilnius (LT)**

Remarks:
Amended claims in accordance with Rule 137(2) EPC.

(54) **System optical magnification change method without image quality deterioration**

(57)     The purpose of this invention - method of use of the micro-display with resolution higher than resolution of the CCD light-sensitive area which used for production of optical heads / sights attached to guidance systems or (sniper) weapon. A pixel (dot) of such micro-display has 4 sub-pixels. Applying an ordinary micro-display one pixel with a mask with a possibility of luminescence by different colours is used. When using the micro-display in this invention an intermediate version of coating is applied. And all four sub-pixels are separately used through the matrix control system. As a result, the micro-display resolution is increased by 2 times. Not the image linear dimension on CCD but the image linear dimension on the micro-display is changed in this invention. And this allows that a sub-pixel works as a pixel using a big number of elements when magnifying the image.

The purpose of this invention is also the device (the sight) in which the above mentioned methods are used and in which the sight has a possibility of the image magnification without the image quality reduction and without the device overall dimensions (including weight) increase.

Fig. 2

**Description**

FIELD OF INVENTION

This invention belongs to optical systems and image electronic magnification methods. This invention is used in different sights and also in night viewing devices.

BACKGROUND OF INVENTION

According to the theory it is known that total magnification of the (optical) digital system ($\Gamma$) is expressed by the following equation (ratio):

$$\Gamma = \frac{f'_1}{f'} * \frac{d_d}{d_{CCD}} = \frac{\omega_1}{\omega_e} \quad (E1)$$

,

where:

$f'_1$ - the lens focal length;
$f'_e$ - the eyepiece focal length;
$d_d$ - the image linear dimension on the display;
$d_{CCD}$ - the image linear dimension of CCD;
$w_1$ - the lens angle;
$w_e$ - the eyepiece angle.

Change of one of equation terms / member causes change of total magnification of the system ($\Gamma$).
Many inventions related with optical systems which are used in sights for guidance systems or for weapons with various optical filling are patented in the world. It also currently popular to convert optical images into digital images adding to them supplementary information (target data, time, ambient temperature, air humidity, wind velocity etc.) when using such optical devices.
The international patent application WO2012061154 published on 10 May 2012 is known. It describes a target guidance optical system with a processor collecting and processing information about a target and placing a scale grid over an image in the screen centre. This design is quite cumbersome and big in terms of overall dimensions. As optical instruments and devices have big weight, total design weight is significantly increased and it is hard to use when such systems are applied in weapons. This international application doesn't solve the problem of compactness and sighting simplicity not deteriorating the image quality.
The US patent US2010095578 published on 22 April 2010 is known. It considers a lightweight and compact sight for a gun. The sight has optical and digital components. There is also a possibility to activate the grid display on the screen which is the invention essence. But it is not about the image quality in this system, this rather reminds an elementary sight with a screen (micro-display) light.
Also the utility model CN202793179 published on 13 March 2013 is also known. This document considers a problem of target adjustment depending on external parameters such as: wind velocity, target distance, ambient temperature and air humidity. The device is equipped by different sensors / indicators and by a microprocessor which estimate the target deviation from the grid central dot and display the dot at which you should aim to be on the target. All data are represented on the micro-display screen in real time and in text format. But this invention doesn't solve the micro-display image quality problem.
The European patent application EP2180714 published on 28 April 2010 is the most appropriate in terms of technical level. This application considers issues of the image transfer to the matrix, dot (pixel) displacement in the matrix and the image transfer to the micro-display. There is also described dot (of green colour) processing and sub-pixel image decomposition. But the system magnification ($\Gamma$) without the image quality deterioration is not considered in this document. The problem of the sight (head) weight is also not the subject of this document.
Two methods: a <u>classical optical method</u> and a <u>digital method</u> are used in reality to change ("to magnify the target") a parameter of the optical system ($\Gamma$).
<u>Classical optical schemes</u> comprise changes of the lens or eyepiece focal length and this allows to change magnification ($\Gamma$) generally not deteriorating the frequency-contrast characteristic of the device. The change is performed changing the lens or eyepiece angle, but image linear dimensions on the device with a charge coupling / on the image acquisition sensor (for example, CCD (charge coupled device)) and on the micro-display remain invariable and are used for a full resolution. In this case the optical system (OS) has complicated mechanism, assembly and production technology and this influences the product cost price. It also influences the product weight: the better resolution is, the bigger dimensions and the bigger weight are. When a heavy sight is used for a heavy gun, one should be physically trained. Moreover, it may have a bad influence on shooting accuracy if you aim into the target keeping the gun in hands for a long time. Digital magnification systems are based on reduction of the image from the CCD-matrix - deed (the physical dimension of the CCD sensitive area or the microbolometric matrix / the matrix element diagonal) which is transferred / stretched for $d_d$ (the image diagonal) so that the magnification factor is a difference by two times. This results in resolution reduction (deterioration) which in its turn causes reduction of FCC (the frequency-contrast characteristic) of the system as a whole. For example, if the dot matrix on CCD is 640 x 480, the matrix on the micro-display is 640 x 480 and the pixel size on the micro-display and on the CCD-matrix is 10 $\mu$m (micrometers/microns), then, if you want to perform total magnification by two times, you should reduce the image linear dimension on CCD by two times too which will result in CCD resolution reduction and will be only the pixel matrix of 320 x 240 size while the micro-display linear dimension will remain the same. But the image resolution on the micro-display will be only 320 x 240 being an evidence of the whole system resolution deterioration, i.e. FCC reduction.

The invention stated below allows to magnify the image on the micro-display not deteriorating FCC and at the same time not increasing the product (sight) overall dimensions.

SUMMARY OF THE INVENTION

Magnification changes can be provided by several methods:

changing the lens ($f'_1$) or eyepiece (f'e) focal length;
changing the diagonal of the image on the micro-display ($d_d$);
or
changing the physical dimension of the diagonal of the sensitive area of the image acquisition sensor ($d_{CCD}$) in function of which a CCD, a microbolometer or any other charge-coupled devices can be used (the further invention description is based on CCD).

As the lens and the eyepiece have a fixed focal length, magnification changes can be provided only changing the physical dimension of the image acquisition sensor (the CCD-matrix) or changing the physical dimension of the image on the micro-display. This defines the change concept of the physical dimension of the image on the micro-display without the (system resolution) quality deterioration.

Digital magnification systems are based on reduction of the image from the CCD-matrix - $d_{CCD}$ which is transferred / stretched for $d_d$ so that the magnification factor is a difference by two times. This results in the image resolution reduction which in its turn causes reduction of FCC of the system as a whole.

Not the image linear dimension on the image acquisition senor (on CCD) but the image linear dimension on the micro-display is changed in this invention. And this allows to combine several pixels in work as one pixel when magnifying the image, i.e. it allows that a sub-pixel works as a pixel using bigger number of elements / dots for imaging. At the same time the image resolution remains the same as in the beginning (640 x 480), but the micro-display pixel dimension is changed. It is also necessary that the eyepiece has the micro-display maximum linear field in order not to reduce the image during the micro-display maximum magnification.

The purpose of this invention consists in methods of use of the micro-display with resolution higher than resolution of the CCD light-sensitive area. A pixel (dot) of such micro-display has 4 sub-pixels. Using an ordinary micro-display one pixel which structurally has four pixels with different colours is applied. A colour image is obtained as a result of their mixing. When using the micro-display in this invention the embodiment intermediate version for use of four sub-pixels is applied. And all four sub-pixels have green colour (monochrome colour) and are separately used by the matrix through the control system as monochrome colour pixels. As a result, the micro-display resolution is increased by 2 times.

The purpose of this invention is also the device (head, sight) in which the micro-display use method with a sub-pixel system is applied. In such case the sight image can be magnified (i.e. the target magnification / zooming) without the image quality deterioration / reduction and without the device overall dimensions (including weight) increase.

BRIEF DESCRIPTION OF THE FIGURES / DRAWINGS

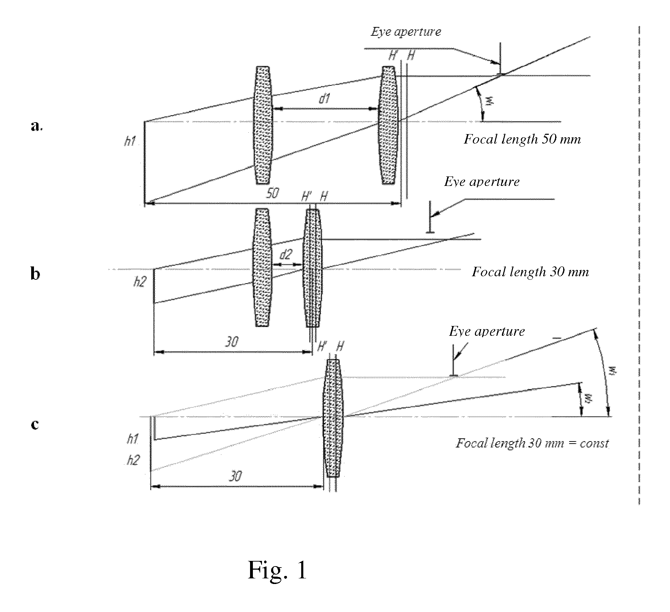

The eyepiece operation example is shown in Figure 1. The eyepiece zoom system with displacement of optical components and with change of main paraxial planes of the system with a focal length from 30 mm to 50 mm is shown in Figure 1 a) and b). The wide-angle eyepiece with a fixed focal length 30 mm is shown in Figure 1 c).

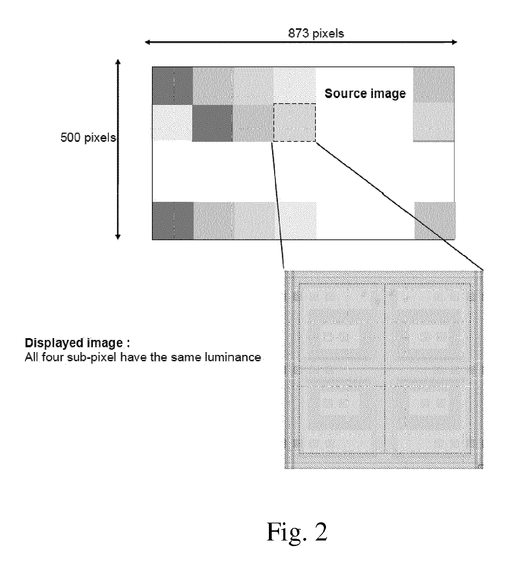

The scheme of the pixel cluster used within this invention is shown in Figure 2.

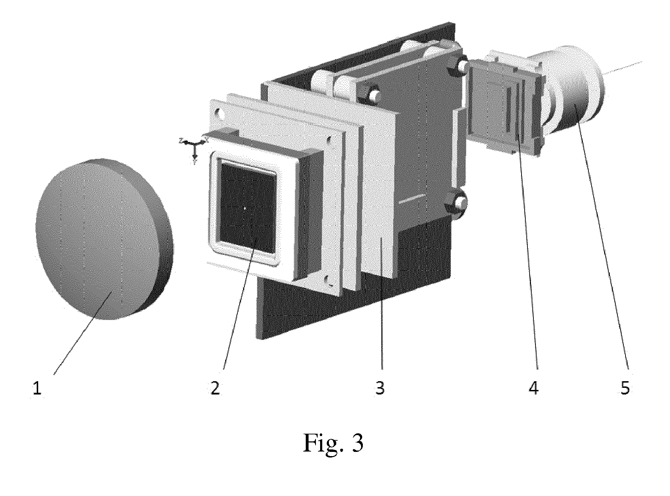

The general arrangement of the device using the method of this invention is shown in Figure 3.

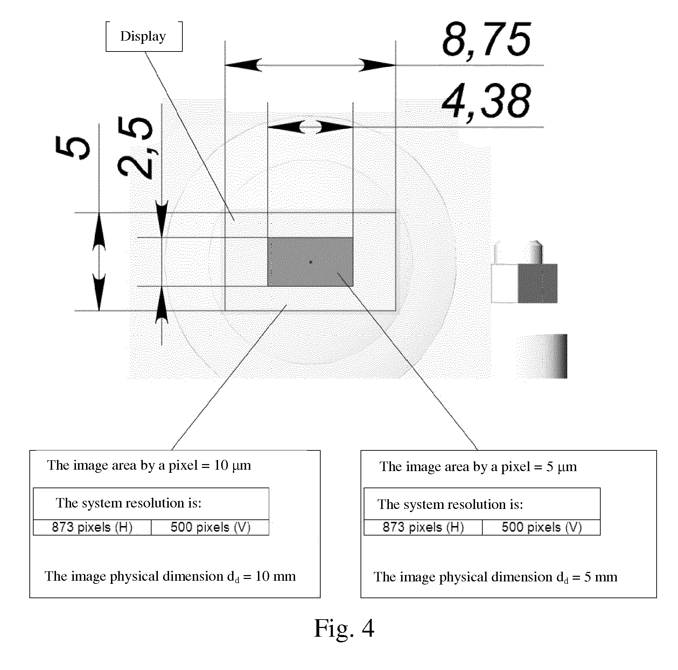

The scheme of the micro-display scale change with preservation of the image resolution is shown in Figure 4.

DESCRIPTION OF THE PREFERRED EMBODIMENT

As previously stated, digital magnification systems are based on reduction of the image from the CCD-matrix - $d_{CCD}$ which is transferred / stretched for $d_d$ so that the magnification factor is a difference by two times. This results in the image resolution reduction which in its turn causes reduction of FCC of the system as a whole.

This invention allows to implement digital magnification without quality deterioration, i.e. without the image FCC reduction. The image linear dimension on the image acquisition sensor (on CCD) is not decreased and the image linear dimension on the micro-display is increased within this invention which allows to combine several pixels in work as one pixel when magnifying the image, i.e. it allows that a sub-pixel works as a pixel using bigger number of elements / dots for imaging. At the same time the image resolution remains the same as in the beginning (640 x 480), but the micro-display pixel dimension is changed. It is also necessary that the eyepiece has the micro-display maximum linear field in order not to reduce the image during the micro-display maximum magnification.

The eyepiece operation example is shown in Figure 1, where the eyepiece zoom system with displacement of optical components and with change of main paraxial planes of the system with a focal length from 30 mm to 50 mm is shown in Figure 1 a) and b). The wide-angle eyepiece with a fixed focal length 30 mm is shown in Figure 1 c). If the micro-display image is 8 mm diagonally, the field angle at a focal length of 30 mm is w2 =15°. When the eyepiece focus is increased up to 50 mm, the field angle is w1=9° accordingly.

It is shown in Figure 1 c) in which way the eyepiece field angle is changed without the eyepiece focal length change changing the image diagonal linear dimension on the micro-display. The eyepiece linear field is 8 mm at a focal length of 30 mm while the field angle is w2=15°. If the eyepiece linear field is 4.8 mm, the field angle is w2=9°. Such magnification type allows to change the system magnification not changing the device field angle in the objects area, i.e. the lens field angle is a constant (const). There is no reduction of the system FCC. So the image resolution (quality) is not reduced regardless of the magnification step when magnifying (zooming the target). The micro-display sub-pixels are used in this invention and the image may be readjusted for a definite sub-pixel not reducing the image cropping it but magnifying it. However, in this case not 10 $\mu$m pixel of the micro-display in the standard mode but 5 $\mu$m sub-pixel of the micro-display functions. It can be practically any magnification step. This depends on use of bits (capacity) in the device software and electronic version and also on the mathematical treatment / processing, i.e. on approximation of the obtained image: when the system reaches the magnification by 2 times, then you may switch to 10 $\mu$m pixel and continue magnification of the active area of the whole micro-display. The image minimum dimension without quality deterioration is reached only when using 5 $\mu$m pixel of the micro-display. If the dimension is smaller, there will be quality deterioration because of cropping the image obtained from the image acquisition sensor (CCD).

The micro-display but not the image acquisition sensor plays a key role in this invention. A pixel (dot) of such micro-display has 4 sub-pixels. Applying an ordinary micro-display one pixel which structurally has four pixels with different colours is used. A colour image is obtained as a result of their mixing. When using a micro-display in this invention the micro-display structural type intermediate version is applied. And all four sub-pixels have green colour and are separately used through the matrix control system as monochrome colour pixels. As a result, the micro-display resolution is increased by 2 times. Thus, the micro-display has initially higher resolution that the image acquisition sensor (CCD sensor). The essence of the method consists in a successive increase of the image transfer for a bigger (in terms of dot number on the micro-display surface) dimension of the micro-display without quality deterioration, because smaller dimension of the sensor is transferred to bigger dimension of the micro-display in pixels in this case. As a result, magnification changes without the image quality deterioration take place in the optical system.

The micro-display operating principle as a separate element is shown below for illustrative purposes. The micro-display of MDP01A type is used as an example:

Table 1- The micro-display resolution when using sub-pixels:

| | Resolution by 10 $\mu$m pixel dimension | | Resolution by 5 $\mu$m pixel dimension Sub-pixel | |
|---|---|---|---|---|
| Display | X native resolution | Y native resolution | X maximum resolution | Y maximum resolution |
| MDP01A | 873 pixels | 500 pixels | 1,746 pixels | 1,000 pixels |

The image has the same physical dimension specified in Table 2 with these resolution parameters of Table 1.

Table 2- The image physical dimension when using sub-pixels

| | The image physical dimension with 10 $\mu$m pixel | | The image physical dimension with 5 $\mu$m pixel | |
|---|---|---|---|---|
| Display | X native resolution | Y native resolution | X maximum resolution | Y maximum resolution |
| MDP01A | 8.73 mm | 5.00 mm | 8.73 mm | 5.00 mm |

As the standard pixel cluster consists of 4 sub-pixels of monochrome colour, it is possible to switch a transfer of one digital signal from 4 pixels to each definite sub-pixel. This causes the image physical reduction by two times, but also colour lack (it is not a problem for night viewing devices, because there are no colours anyway).

Let's consider the example below. The pixel cluster scheme is shown in Figure 2. The image is transferred to the micro-display from the image acquisition sensor and has a full format, i.e. each pixel of the photodetector array sets a signal to a definite sub-pixel of monochrome colour. In this case the image has the photodetector array resolution while the photodetector array pixel signal comes to the pixel of the micro-display which consists of four sub-pixels. Thus, the image resolution remains invariable and the image physical dimensions are increased by two times.

One of peculiarities of the system is a mathematical apparatus which converts the image scale on micro-displays not only by two times, but it is possible to set digital magnification with a definite step making digital magnification less than by 2 times depending on the photodetector array resolution and the image transfer on the micro-display without resolution deterioration when using total matrix.

The device operation description in general is considered below. The general arrangement of the device using the method of this invention is shown in Figure 3.

The lens (1) of the device constructs the image of articles which are in the field of vision of the control device in a focal plane where the image acquisition sensor is installed: a CCD-matrix or a microbolometer (2) which converts radiant energy into an electrical signal / an analog signal.

Electronic components (3) of the control device convert the above mentioned electrical signal into a digital signal using the image processing electronic board, i.e. the device electronic filling and mathematical apparatus (software). Then this digital signal is projected on the micro-display (4) with different electronic magnification factors. The digital signal comes to the electronic filling of the micro-display converting the electrical signal into a light signal / a video image. The sub-pixel element dimension is not more than 5 $\mu$m, but in combination of four sub-pixels and supply of one source signal from the photodetector array to them allows to make a pixel with a dimension not more than 10 $\mu$M which will increase the pixel dimension by two times. In this case the image resolution remains invariable while the image physical dimension becomes larger by two times. And in its turn this provides the system magnification by two times at a fixed focal length of the lens and the eyepiece.

The Figure 4, in which the scheme of the micro-display scale change with preservation of the image resolution is shown, is represented for illustrative purposes. Then the image from the micro-display in the form of radiation in the visible spectrum passes through the eyepiece (5) and is projected by a parallel beam in the human visual system.

This invention can be used as a head or a sight in guidance systems, different guns, tracking systems, telescopes, monoculars, night viewing devices etc.

In order to illustrate and describe the invention, description of the most preferred embodiment options is provided hereinabove. This invention does not require particular steps to be performed or does not limit a claim to a particular structure or scope. The above description shall be regarded as an illustration rather than a limitation. It is apparent that specialists in the field may be well aware of multiple possible modifications and variations. The described methods of embodiment have been selected and described with the aim to assist the specialists in the field in exploring the principles of the invention and its practical application using various methods and modifications for particular use or embodiment, as quantitative parameters of the product and its application may be different depending on the particular use or embodiment. It has been anticipated that the scope of invention is defined by the enclosed claim and its equivalents containing the terms that are used in the widest scope of meaning, unless stated otherwise. It has been acknowledged that methods of embodiment described by the specialists in the field may provide amendments that do not deviate from the scope of the invention as stated in the claim hereinafter.

**Claims**

1. An optical device / instrument comprising of:

    a lens constructing an image of articles which are in a field of vision of a control device in focal plane;
    an image acquisition sensor which converts the radiant energy into an electrical signal;
    electronic components converting the signal from the sensor into a digital signal using an image processing electronic board;
a micro-display converting the electrical signal into a light signal / a video image; and
an eyepiece through which this image in the form of radiation passes and is projected into human visual system,

**characterized in that**
the <u>micro-display (4) used is of higher resolution than resolution of the sensor / the image acquisition pixel density (2),</u>

allowing the magnification parameter change in the device by means of change of the image visible dimension on the micro-display using <u>monochrome colour sub-pixels of smaller value than the sensor pixels</u> while all 4 sub-pixels are used through the matrix control system;

thus, a possibility to readjust the image for a definite sub-pixel of the monochrome colour not reducing the image cropping it but magnifying it is realized;
where the liner dimension on the micro-display is changed which allows that a sub-pixel works as a pixel using a big number of elements / dots to construct the image; while the dimension of the image acquired from the sensor and reflected on the micro-display can be smaller than the micro-display active area designed for imaging.

2. An optical device according to claim 1, **characterized in that** the sub-pixel diagonal dimension can be smaller by two times than the pixel diagonal dimension; where the sub-pixel optimum minimum diagonal dimension is not more than 5 $\mu$m and the appropriate pixel cluster / pixel diagonal dimension is not more than 10 $\mu$m.

3. An optical device according to claim 1 or 2, **characterised in that** there can be any magnification step depending on use of bits / capacity in the device software and electronic version and also on the mathematical processing apparatus, i.e. on approximation of the obtained image: when the system reaches the magnification by 2 times, then it is possible to switch to a pixel (10 $\mu$m) from a sub-pixel (5 $\mu$m) and continue magnification to the active area of the whole micro-display.

4. An optical device according to any above mentioned claims, **characterised in that** this optical device is used as a head or a sight in guidance systems, different guns, tracking systems, telescopes, monoculars, night viewing devices, etc.

5. A method of use of a micro-display (4) in an optical device, comprising of a lens, an image acquisition sensor, electronic components and an eyepiece according to any of the above mentioned claims 1-4, where a resolution of which (the display) exceeds resolution of the image acquisition sensor in which monochrome colour sub-pixels are used for readjustment of the image for a definite sub-pixel not reducing the image cropping it but magnifying it; thus the specified device has a possibility to magnify the image / to zoom the target optically without the image quality deterioration and without increase of overall dimensions including the device weight.

**Amended claims in accordance with Rule 137(2) EPC.**

1. An optical device comprising:

a lens (1) constructing an image of articles which are in a field-of-vision of a control device in a focal plane;
an image acquisition sensor (2) which converts radiant energy into an electrical signal;
electronic components (3) associated with an image processing electronic board that convert the electric signal from the image acquisition sensor (2) into a digital signal;
a micro-display (4) converting the digital signal into a video image displayed on the micro-display (4); and
an eyepiece (5) through which this video image is projected,

**characterized in that**
the micro-display (4) pixel density used is of higher resolution than a resolution of acquisition sensor (2) pixel density, and each pixel of the micro-display (4) comprises a plurality of monochrome sub-pixels, the monochrome sub-pixels of a smaller size than pixels of the image acquisition sensor (2) and the plurality of monochrome sub-pixels used by a matrix control system to increase the resolution of the micro-display (4) and to permit magnification of the video image displayed on the micro-display (4) without cropping the video image.

2. The optical device according to claim 1, **characterized in that** a linear dimension of the image acquisition sensor (2) remains constant, where a sub-pixel optimum minimum diagonal dimension is not more than 5 μm and a pixel cluster diagonal dimension is not more than 10 μm.

3. The optical device according to claim 1, **characterized in that** a sub-pixel diagonal dimension is two times smaller than a pixel diagonal dimension.

4. The optical device according to claim 3, **characterised in that** the micro-display (4) can be switched from using a 5 μm sub-pixel to using a 10 μm pixel in order to permit continued magnification to an active area of the micro display (4).

5. The optical device according to claim 1, **characterized in that** each monochrome sub-pixel can be used as a separate pixel or in combination with other monochrome sub-pixels to construct the video image; and the dimension of the video image is smaller in dimension than an active area of the micro-display (4) allocated for imaging.

6. The optical device according to claim 1, **characterised in that** the optical device is used as a a sight in a guidance system, a firearm, a tracking system, a telescope, a monocular, or night vision device.

7. The optical device according to claim 1, **characterized in that** a focal length between the eyepiece (5) and a corresponding lens (1) between the eyepiece (5) and the micro-display (4) is fixed.

8. The optical device according to claim 1, **characterized in that** the eyepiece (5) is configured to encompass a maximum linear field value associated with the micro-display (4).

9. The optical device according to claim 1, **characterized in that** a digital signal corresponding to a pixel, can be switched to instead correspond with a particular sub-pixel.

10. A method of use of an optical device according to any of claims 1-9, **characterized in that** a method comprising:

   receiving a digital signal encoded with an initial resolution, the digital signal constructed from visual data collected by an image acquisition sensor (2);
   constructing a video image from the digital signal to display on a micro-display (4) of the optical device, wherein an initial linear dimension of the video image is smaller than a linear dimension of an active area of the micro-display (4) allocated for imaging;
   initiating display for the video image on the micro-display (4), wherein the video image is displayed using a plurality of monochrome sub-pixels configured to act as independent pixels for display of the video image, each monochrome sub-pixel is a smaller size than a pixel of the image acquisition sensor (2) and each monochrome sub-pixel associated with a group of other monochrome sub-pixels that form a single pixel on the micro-display (4);
   receiving a magnification request for the video image on the micro-display (4);
   adjusting the video image on the micro-display (4) using a matrix control system, the matrix control system increasing a linear dimension of the video image on the micro-display (4) by combining groups of monochrome sub-pixels of the plurality of monochrome sub-pixels where each group of monochrome sub-pixels collectively represents a single pixel of the video image at the initial resolution; and
   projecting the video image through an eyepiece (5).

11. The method according to claim 10 **characterized in that** overall micro-display (4) pixel density is of a higher resolution than a resolution of image acquisition sensor (2) pixel density; and the linear dimension of the image acquisition sensor (2) remains constant.

12. The method according to claim 10, **characterized in that** a sub-pixel diagonal dimension is two times smaller than a pixel diagonal dimension, where a sub-pixel optimum minimum diagonal dimension is not more than 5 μm and a pixel cluster diagonal dimension is not more than 10 μm.

13. The method according to claim 12, **characterized in that** comprising switching display from using a 5 μm sub-pixel to using a 10 μm in order to permit continued magnification to an active area of the micro-display (4).

14. The method according to claim 10, **characterized in that** a focal length between the eyepiece (5) and a corresponding lens (1) between the eyepiece (5) and the micro-display (4) is fixed.

7

**15.** The method according to claim 10, **characterized in that** comprising switching the digital signal corresponding to a pixel to instead correspond with a particular sub-pixel to reduce video image size.

Fig. 1

873 pixels

500 pixels

Source image

Displayed image :
All four sub-pixel have the same luminance

Fig. 2

Fig. 3

Display

8,75

4,38

2,5

5

The image area by a pixel = 10 µm

The system resolution is:

| 873 pixels (H) | 500 pixels (V) |
|---|---|

The image physical dimension $d_d$ = 10 mm

The image area by a pixel = 5 µm

The system resolution is:

| 873 pixels (H) | 500 pixels (V) |
|---|---|

The image physical dimension $d_d$ = 5 mm

Fig. 4

Europäisches
Patentamt

European
Patent Office

Office européen
des brevets

# EUROPEAN SEARCH REPORT

Application Number

EP 14 15 7457

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 947 499 A2 (XENONICS HOLDINGS INC [US]) 23 July 2008 (2008-07-23) * paragraph [0010] - paragraph [0011] * * paragraph [0033] - paragraph [0035] * * figure 6 * | 1-5 | INV. G02B23/12 H04N5/33 |
| X | US 2011/074823 A1 (PLOTSKER VADIM [US]) 31 March 2011 (2011-03-31) * paragraph [0003] - paragraph [0005] * * paragraph [0008] * * paragraph [0017] - paragraph [0027] * * figures 1,3,4 * | 1-5 | |
| Y | BROWNE MICHAEL P ED - MARASCO PETER L ET AL: "Wide field-of-view digital night vision head-mounted display", HEAD- AND HELMET-MOUNTED DISPLAYS XVI: DESIGN AND APPLICATIONS, SPIE, 1000 20TH ST. BELLINGHAM WA 98225-6705 USA, vol. 8041, no. 1, 13 May 2011 (2011-05-13) , pages 1-12, XP060014325, DOI: 10.1117/12.885334 [retrieved on 1901-01-01] * Chapter 2.2 Chapter 3.1, Chapter 3.6, Chapter 3.7, * * figures 2,3,4 * | 1-5 | |

-----

-----

TECHNICAL FIELDS SEARCHED (IPC)

G02B
H04N

-/--

The present search report has been drawn up for all claims

| Place of search | Date of completion of the search | Examiner |
|---|---|---|
| Munich | 18 June 2014 | von Hentig, Roger |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

# EUROPEAN SEARCH REPORT

Application Number

EP 14 15 7457

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | HAAS GUNTHER ET AL: "A 5.4 MDOT OLED microdisplay for digital night vision and image fusion", HEAD- AND HELMET-MOUNTED DISPLAYS XVII; AND DISPLAY TECHNOLOGIES AND APPLICATIONS FOR DEFENSE, SECURITY, AND AVIONICS VI, SPIE, 1000 20TH ST. BELLINGHAM WA 98225-6705 USA, vol. 8383, no. 1, 11 May 2012 (2012-05-11), pages 1-9, XP060003084, DOI: 10.1117/12.918998 [retrieved on 2012-05-21] * abstract * * table 1 * * figure 1 * * Chapter 4.2 Monochrome 2600x 2088 pixel display * * Chapter 4.3 Two-color and three color versions for image overlay and image fusion *  -----  | 1-5 | |

TECHNICAL FIELDS SEARCHED (IPC)

The present search report has been drawn up for all claims

| Place of search | Date of completion of the search | Examiner |
|---|---|---|
| Munich | 18 June 2014 | von Hentig, Roger |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 15 7457

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2014

| Patent document cited in search report | | Publication date | Patent family member(s) | | Publication date |
|---|---|---|---|---|---|
| EP 1947499 | A2 | 23-07-2008 | EP | 1947499 A2 | 23-07-2008 |
| | | | EP | 2378344 A2 | 19-10-2011 |
| US 2011074823 | A1 | 31-03-2011 | NONE | | |

EPO FORM P0459

For more details about this annex : see Official Journal of the European Patent Office, No. 12/82

**EP 2 916 162 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012061154 A
- US 2010095578 A
- CN 202793179
- EP 2180714 A